# EUROPÄISCHE PATENTSCHRIFT

(11) **EP 2 607 062 B1**
(45) Veröffentlichungstag und Bekanntmachung des Hinweises auf die Patenterteilung: **13.08.2014**
(21) Anmeldenummer: 12196220.3
(22) Anmeldetag: 10.12.2012
(51) Int. Cl.: B29C 70/86, B29C 70/54, B29C 33/00, B29C 33/12

(54) **Verfahren zur Herstellung eines Bauteils mit wenigstens einem in das Bauteil wenigstens teilweise eingebetteten Einsatzelement und Formwerkzeug zur Durchführung des Verfahrens**
Method for producing a component with at least one insert element partially embedded in the component and moulding tool for carrying out the method
Procédé de fabrication d'un composant avec au moins un élément d'insertion intégré au moins partiellement dans le composant et outil de formage pour la réalisation du procédé

(30) Priorität: 23.12.2011 DE 102011056981
(43) Veröffentlichungstag der Anmeldung: 26.06.2013
(73) Patentinhaber: REHAU AG + Co, 95111 Rehau (DE)
(72) Erfinder: Krawczuk, Grzegorz, 95111 Rehau (DE)

(56) Entgegenhaltungen:
- FR-A- 1 392 529
- JP-A- 63 042 819

## Beschreibung

### Hintergrund der Erfindung

Die vorliegende Erfindung betrifft ein Verfahren zur Herstellung eines Bauteils mit wenigstens einem in das Bauteil wenigstens teilweise eingebetteten Einsatzelement unter Verwendung eines Formwerkzeugs und ein Formwerkzeug zur Durchführung des Verfahrens.

Bei Bauteilen, die wenigstens teilweise oder zur Gänze aus einem Kunststoffmaterial bestehen und eingebettete Einsatzelemente aufweisen, werden zur Herstellung der Bauteile die Einsatzelemente, wie z.B. Gewindeeinsätze, in Vertiefungen bzw. Öffnungen eingepresst, welche nach dem Formen und Abkühlen des Bauteils durch Bohren bzw. Fräsen hergestellt werden. Das Bohren bzw. Fräsen und Einpressen sind hierbei also nach der Formgebung vorzunehmende Nacharbeiten, die mit einer hohen Materialbelastung verbunden sind und durch welche die mechanische Festigkeit des Bauteils in Umgebung des Einsatzelements wesentlich reduziert werden kann. So gibt es bei Öffnungen bzw. Vertiefungen immer eine mechanische Spannungsüberhöhung in angrenzender Umgebung der Öffnung bzw. Vertiefung, die zur Folge hat, dass sich Anfangsrisse, die sich insbesondere beim Bohren bzw. Fräsern bilden können, infolge der mechanischen Spannungsüberhöhung auch schnell ausbreiten und zu einem Versagen bzw. Bruch des Bauteils führen können.

### Zugrundeliegende Aufgabe

Gegenüber den bekannten Lösungen, liegt der vorliegenden Erfindung die Aufgabe zugrunde, ein alternatives Verfahren zur Herstellung eines Bauteils mit wenigstens einem in das Bauteil wenigstens teilweise eingebetteten Einsatzelement unter Verwendung eines Formwerkzeugs anzugeben, mit welchem ein Bauteil herstellbar ist, dessen mechanische Festigkeit in Umgebung des Einsatzelements im Vergleich zu bekannten Lösungen deutlich erhöht ist, und ferner ein Formwerkzeug zur Durchführung des Verfahrens anzugeben.

### Erfindungsgemäße Lösung

Diese Aufgabe wird erfindungsgemäß mit einem Verfahren zur Herstellung eines Bauteils mit wenigstens einem in das Bauteil wenigstens teilweise eingebetteten Einsatzelement unter Verwendung eines Formwerkzeugs mit den Merkmalen des Anspruchs 1 und mit einem Formwerkzeug mit den Merkmalen des Anspruchs 17 gelöst.

JP-A-63042819 offenbart ein Verfahren und Vorrichtung zur Herstellung von Löcher in Verbundwerkstoffen gemäß dem Oberbegriff des Anspruchs 1.

Im Unterschied zu den bekannten Lösungen, bei denen nach der Formgebung des Bauteils ein Einpressen des jeweiligen Einsatzelements in durch Bohren bzw. Fräsen hergestellte Vertiefungen bzw. Öffnungen des Bauteils erfolgt, wird bei der erfindungsgemäßen Lösung ein Einbettung des Einsatzelements in das Formteil - welches wenigstens teilweise oder auch zur Gänze aus einem Kunststoffmaterial besteht - vorgenommen bevor das Formteil in Schritt H durch das Formwerkzeug durch Verformen ausgebildet bzw. gebildet wird. Dies hat den Vorteil, dass die Einbettung vorteilhaft in den Herstellungsprozess integriert werden kann, wodurch wiederum eine vorteilhafte Automatisierung des Herstellungsprozesses möglich ist und Nacharbeitskosten wesentlich reduziert werden können.

Das wenigstens teilweise Einbetten des Einsatzelements - welches z.B. aus Messing oder Bronze oder Edelstahl bestehen kann - in das durch das Durchstoßen in Schritt E gebildete Loch erfolgt in Schritt G durch Herausbewegen des in dem zweiten Hohlraum angeordneten Teilabschnitts aus dem zweiten Hohlraum und hin zu dem ersten Hohlraum, und zwar unter Beibehaltung des Kontakts mit dem Einsatzelement.

In Schritt D erfolgt das Überführen des Kunststoffmaterials wenigstens des Bereichs des Formteils in einen fließfähigen Zustand, in welchen das Einsatzelement wenigstens teilweise einzubetten ist, und zwar durch Erwärmen. Dies hat den Vorteil, dass die Bildung von Anfangrissen erfindungsgemäß wirksam derart vermieden oder sehr stark reduziert wird, dass in Schritt E der Dorn das Loch in einem Material bzw. Kunststoffmaterial ausbildet, das sich in dem fließfähigen Zustand befindet, einhergehend mit einer wesentlichen Erhöhung der mechanischen Festigkeit in Umgebung des Einsatzelements im Vergleich zu bekannten Lösungen. Ferner kann infolge der Ausbildung des Lochs in dem fließfähigen Kunststoffmaterial vorteilhaft von aufwendigen Nacharbeiten umfassend Bohren bzw. Fräsen und Einpressen, wie es bei bekannten Lösungen nach der Formgebung und dem Abkühlen des Bauteils erfolgt, abgesehen werden.

Besonders bevorzugt wird nicht nur der Bereich des Formteils in einen fließfähigen Zustand überführt wird, in welchen das Einsatzelement wenigstens teilweise oder zur Gänze einzubetten ist, sondern auch diesen Bereich umgebende und an diesen Bereich angrenzende Bereiche des Formteils. Bevorzugt kann in Schritt D das Formteil zur Gänze in den fließfähigen Zustand überführt werden. Die Überführung in den fließfähigen Zustand erfolgt beispielsweise durch Erwärmen des Formteils.

Das Loch befindet sich in infolge der gemäß Schritt D vorgenommenen Überführung des Kunststoffmaterials in den fließfähigen Zustand in einem Bereich dessen Kunststoffmaterial sich vorzugsweise in einem fließfähigen Zustand befindet, sofern nicht nur der Bereich des Formteils in einen fließfähigen Zustand überführt wird, in welchen das Einsatzelement wenigstens teilweise oder zur Gänze einzubetten ist, sondern auch diesen Bereich umgebende und an diesen Bereich angrenzende Bereiche des Formteils. Das wenigstens teilweise Einbetten gemäß Schritt G des erfindungsgemäßen Verfahrens erfolgt daher vorteilhaft derart, dass das Einsatzelement in ein Loch eingebettet wird, dass in einem Material bzw. einem Kunststoffmaterial ausgebildet ist, das sich in einem fließfähigen Zustand befindet.

Dadurch, dass das Einsatzelement in ein Loch eingebettet wird, das vorzugsweise in einem fließfähigen Material bzw. einem fließfähigen Kunststoffmaterial ausgebildet ist, können sich infolge des vorhandenen fließfähigen Zustands auch keine oder keine wesentlichen Spannungserhöhungen in angrenzender Umgebung des Lochs ausbilden. Dies wiederum hat den Vorteil, dass selbst wenn sich in geringem Umfang Anfangsrisse beim Ausbilden des Lochs bilden würden, dennoch eine Reduzierung der mechanischen Festigkeit in Umgebung des Einsatzelements dadurch vermieden wird, dass eine mechanische Spannungsüberhöhung in angrenzender Umgebung der Öffnung bzw. Vertiefung - die bei bekannten Lösungen zu einer Ausdehnung der Anfangsrisse führen kann - infolge des fließfähigen Zustands vermieden oder sehr deutlich reduziert ist.

Insgesamt gesehen ist mit dem erfindungsgemäßen Verfahren ein Bauteil herstellbar, dessen mechanische Festigkeit in Umgebung des Einsatzelements im Vergleich zu bekannten Lösungen deutlich erhöht ist.

Dadurch, dass das Einsatzelement in ein Loch eingebettet wird, das vorzugsweise in einem fließfähigen Material bzw. einem fließfähigen Kunststoffmaterial ausgebildet ist, kann sich ferner vorteilhaft auch eine formschlüssige Verbindung zwischen dem Bauteil und dem Einsatzelement dadurch ausbilden, dass das Kunststoffmaterial in Schritt J beim Abkühlen des Bauteils, also wo das Kunststoffmaterial durch das Abkühlen von dem fließfähigen Zustand in einen festen Zustand überführt wird, schrumpft bzw. sich zusammenzieht und sich um das Einsatzelement unter Ausbildung bzw. Bildung einer formschlüssigen Verbindung herum zieht.

Durch die Benennung der Schritte mit den Buchstaben A bis J wird keine ausschließliche Bindung an eine zeitliche Reihenfolge verfolgt. Die Buchstaben dienen lediglich der Benennung bzw. Kennzeichnung der Schritte. So kann Schritt C nach Schritt B vorgenommen werden und Schritt D kann nach Schritt C vorgenommen werden. Es ist jedoch auch durchaus denkbar um im Sinne der Erfindung, dass Schritt B nach Schritt C und Schritt C nach Schritt D vorgenommen wird. Auch ein zeitgleiches bzw. im Wesentlichen zeitgleiches Vornehmen der Schritte B und C bzw. der Schritte C und D ist möglich. Schritt E erfolgt jedoch hingegen nach Schritt D. Schritt F erfolgt nach Schritt E, Schritt G erfolgt nach Schritt F und Schritt H erfolgt nach Schritt G. Schritt I erfolgt vorzugsweise nach Schritt H, kann jedoch auch vor Schritt H und nach Schritt G vorgenommen werden. Das Vornehmen des Schritts I nach Schritt H hat den Vorteil, dass ein nachteiliges Verschieben oder Verrücken des in Schritt H zu verformenden Formteils infolge des Wegbewegens des Teilabschnitts wirksam vermieden werden kann.

Bei einer bevorzugten Ausführungsform des erfindungsgemäßen Verfahrens ist das Einsatzelement in Querrichtung des zweiten Hohlraums spielbehaftet in dem zweiten Hohlraum bewegbar. Durch die spielbehaftete Bewegbarkeit des Einsatzelements in Querrichtung -wobei das Einsatzelement bei dieser bevorzugten Ausführungsform in dem zweiten Hohlraum in Längsrichtung des zweiten Hohlraums bewegbar ist - kann ein Einklemmen des Einsatzelements in dem zweiten Hohlraum wirksam vermieden werden.

In Schritt B wird das Einsatzelement bevorzugt ortsfest in dem zweiten Hohlraum angeordnet, wobei die ortsfeste Anordnung bevorzugt mittels eines Haltekraft, die insbesondere eine magnetische Haltekraft sein kann, bereitgestellt wird. Dies ist insbesondere dann von Vorteil, wenn infolge der Ausrichtung des zweiten Hohlraums bzw. des zweiten Werkzeugteils eine ortsfeste Anordnung infolge Schwerkrafteinwirkung ohne zusätzliche Haltekraft nicht möglich ist. Die ortsfeste Anordnung wird nach Schritt F und vor Schritt G aufgehoben.

Bei einer praktischen Ausführungsform weist das Einsatzelement eine Vertiefung oder eine Öffnung auf, und wobei in Schritt F der sich verjüngende Endbereich wenigstens teilweise in die Vertiefung oder die Öffnung des Einsatzelements eingebracht und dabei die Vertiefung verschlossen oder die Öffnung einseitig verschlossen wird, und wobei in Schritt G das Bewegen aus dem zweiten Hohlraum heraus und hin zu dem ersten Hohlraum unter Beibehaltung des die Vertiefung verschließenden Zustands oder die Öffnung einseitig verschließenden Zustands vorgenommen wird.

Dadurch, dass die Vertiefung verschlossen oder die Öffnung einseitig verschlossen wird und das Bewegen aus dem zweiten Hohlraum heraus und hin zu dem ersten Hohlraum unter Beibehaltung des die Vertiefung oder Öffnung verschließenden Zustands vorgenommen wird, kann vorteilhaft ein unerwünschtes Eindringen von Material bzw. Kunststoffmaterial des Formteils in die Vertiefung bzw. Öffnung des Einsatzelements beim Einbetten des Einsatzelements in Schritt G vermieden werden. Diese praktische Ausführungsform ist daher insbesondere von Vorteil, wenn, wie bei einer weiteren Ausführungsform des erfindungsgemäßen Verfahrens vorgesehen, das Einsatzelement in Form einer Hülse oder in Form eines Gewindeeinsatzes mit einem Innengewinde ausgebildet ist, wobei dann die Vertiefung bzw. die Öffnung der Hülse bzw. des Gewindeeinsatzes verschlossen bzw. einseitig verschlossen wird. Ferner kann insbesondere bei dieser praktischen Ausführungsform das Einsatzelement bevorzugt in Querrichtung des zweiten Hohlraums spielbehaftet in dem zweiten Hohlraum bewegbar sein. Durch die in Querrichtung spielbehaftete Bewegbarkeit des Einsatzelements kann der sich verjüngende Endbereich vorteilhaft nach Art einer Selbstzentrierung in die Vertiefung bzw. Öffnung des Einsatzelement, die sich vorzugsweise im Wesentlichen in Längsrichtung des zweiten Hohlraums erstreckt, eingebracht werden, wobei hierbei ferner das Einsatzelement in dem zweiten Hohlraum in Längsrichtung des zweiten Hohlraums bewegbar ist.

Bei einer weiteren praktischen Ausführungsform des erfindungsgemäßen Verfahrens wird in Schritt G zum wenigstens teilweisen Einbetten des Einsatzelements in das Loch, der Teilabschnitt unter Beibehaltung des Kontakts mit dem Einsatzelement mittels einer auf das Einsatzelement einwirkenden Druckkraft aus dem zweiten Hohlraum heraus und hin zu dem ersten Hohlraum bewegt, wobei vorzugsweise eine Schubeinrichtung mit einem in Längsrichtung des zweiten Hohlraums verschiebbaren stempelförmigen Schubelement zum Übertragen der Druckkraft auf das Einsatzelement vorgesehen ist. Durch Vorsehen der Schubeinrichtung mit dem in Längsrichtung des zweiten Hohlraums verschiebbaren stempelförmigen Schubelement kann auf praktische Weise ein Einbetten des Einsatzelements vorgenommen werden. Insbesondere ist durch Vorsehen der Schubeinrichtung eine Automatisierung des Einbettens bzw. des Einbettungsvorgangs möglich, was insbesondere bei der Herstellung einer Vielzahl von Bauteilen z.B. im Rahmen einer Serienfertigung von Vorteil ist.

Bei einer bevorzugten Ausführungsform des erfindungsgemäßen Verfahrens wird in Schritt F der Teilabschnitt mit dem Einsatzelement lösbar verbunden, und in Schritt G wird zum wenigstens teilweisen Einbetten des Einsatzelements in das Loch, der Teilabschnitt mittels einer auf den Dorn einwirkenden Zugkraft aus dem zweiten Hohlraum heraus und hin zu dem ersten Hohlraum bewegt, und nach dem Einbetten wird die lösbare Verbindung des Teilabschnitts mit dem Einsatzelement gelöst. Auch mit dieser bevorzugten Ausführungsform kann auf praktische Weise ein Einbetten des Einsatzelements vorgenommen werden, wobei bevorzugt zum lösbaren Verbinden eine Schraubverbindung oder eine magnetische Verbindung oder eine lösbare kraftschlüssige und/oder formschlüssige Verbindung vorgesehen ist. Insbesondere kann durch Vorsehen der lösbaren Verbindung ein z.B. durch Erschütterungen mögliches Lösen oder Verschieben des Kontakts des Teilabschnitts mit dem Einsatzelement wirksam vermieden werden, so dass insgesamt gesehen mit dieser bevorzugten Ausführungsform ein praktisches und insbesondere auch erschütterungsunempfindliches Einbetten des Einsatzelements möglich ist.

Bei einer praktischen Ausführungsform des erfindungsgemäßen Verfahrens ist das Einsatzelement länglich ausgebildet und weist einen Endabschnitt mit einem umlaufenden Bund auf, der an einen Einbettbereich des Einsatzelements angrenzt, wobei der Einbettbereich in Schritt G in das Loch eingebettet und der umlaufende Bund wenigstens bereichsweise auf dem das Loch umgebenden Bereich des Formteils aufgelegt wird.

Diese praktische Ausführungsform ermöglicht die Herstellung eines Bauteils, bei dem der Bund des Einsatzelements - das insbesondere in Form einer Hülse oder in Form eines Gewindeeinsatzes mit einem umlaufenden Bund ausgebildet sein kann - auf dem Bauteil bzw. dem Bauteil-Material aufliegt. Der Bund kann hierbei insbesondere z.B. vorteilhaft für die Aufnahme einer Schraubenspannung vorgesehen sein. Vorzugsweise wird der aufgelegte umlaufende Bund mittels einer auf den Bund einwirkenden Druckkraft zum Konsolidieren des Formteils im Umgebungsbereich des Einsatzelements an das Formteil gepresst. Unter Konsolidieren ist erfindungsgemäß ein Verdichten bzw. Kompaktieren des Formteils zu verstehen. Beim dem Konsolidieren kann durch das Verdichten bzw. Kompaktieren insbesondere in dem Formteil aufgenommene Luft aus dem Formteil entweichen. Auch hier kann eine Schubeinrichtung mit einem in Längsrichtung des zweiten Hohlraums verschiebbaren stempelförmigen Schubelement zum Übertragen der Druckkraft auf das Einsatzelement vorgesehen sein, mit welcher auf praktische und automatisierbare Weise eine Übertragung der Druckkraft möglich ist.

Der aufgelegte umlaufende Bund kann ferner mittels einer auf den Bund einwirkenden Druckkraft auch wenigstens teilweise oder zur Gänze in das Formteil hineingepresst werden, sofern sich das Kunststoffmaterial in einem Bereich des Formteils in Umgebung des in Schritt E ausgebildeten Lochs in dem fließfähigen Zustand befindet. Auf diese Weise kann der Bund des Einsatzelements auch bündig zur der Oberfläche des Bauteils ausgerichtet werden.

Vorzugsweise handelt es sich bei dem wenigstens einen Formteil um ein flächig ausgebildetes Formteil, wobei besonders bevorzugt, dass wenigstens ein Formteil ein endlosfaserverstärktes Formteil mit einer die Fasern zumindest teilweise umgebenden thermoplastischen Matrix ist. Infolge des Vorsehens der Verstärkung durch die Endlosfasern kann vorteilhaft ein Bauteil mit hoher Festigkeit und geringem Gewicht durch das erfindungsgemäße Verfahren hergestellt werden. Die Faserverstärkung wird vorzugsweise durch Mineralfasern, insbesondere Glasfasern, und/oder Carbonfasern, und/oder Aramidfasern und/oder polymeren Fasern, und/oder synthetischen Fasern und/oder aus Fasern von nachwachsenden Rohstoffen gebildet. Dadurch, dass in Schritt E der von dem Dorn durchstoßene Bereich des Formteils sich in einem fließfähigen Zustand befindet, werden bei dem Durchstoßen - im Unterschied zu einer denkbaren bekannten Lösung, bei welcher in ausgehärtetes faserverstärktes Material ein Loch gebohrt würde - nahezu alle Endlosfasern vorteilhaft seitlich weggeschoben ohne dabei zu reißen. Das erfindungsgemäße Verfahren eignet sich daher besonders vorteilhaft auch zur Herstellung von Bauteilen, die mit Endlosfasern verstärkt sind.

Bei einer praktischen Ausführungsform des erfindungsgemäßen Verfahrens wird in Schritt C ein Gelege aus einer Mehrzahl von aufeinander gelegten und/oder aneinander gelegten und/oder nebeneinander gelegten Formteilen zwischen dem ersten und dem zweiten Werkzeugteil eingelegt. Das Gelege wird nach dem gemäß Schritt D vorgesehenen Überführen in den fließfähigen Zustand - wobei hierbei vorzugsweise jedes Formteil zur wenigstens teilweise oder Gänze durch Erwärmen in den fließfähigen Zustand überführt wird - zum Ausbilden des wenigstens einen Lochs mit dem Dorn durchstoßen. Insbesondere kann zur Herstellung eines Bauteils mit mehreren eingebetteten Einsatzelementen auch vorgesehen sein, dass mehrere Löcher von mehreren vorgesehenen Dornen ausgebildet werden können, und zwar durch jeweiliges Durchstoßen des Geleges bzw. des Formteils bzw. einer Mehrzahl von Formteilen.

Bei einer bevorzugten Ausführungsform des erfindungsgemäßen Verfahrens wird in Schritt C nach dem Schließen des Formwerkzeugs das Formteil zwischen dem ersten und zweiten Werkzeugteil durch aufeinander zubewegen des ersten und zweiten Werkzeugteils eingeklemmt. So wird wirksam vermieden, dass das Formteil insbesondere infolge des in Schritt E vorgesehenen Durchstoßens mit dem Dorn nachteilig in seiner Position verrückt oder verschoben wird.

Bei einer praktischen Ausführungsform des erfindungsgemäßen Verfahrens weist das zweite Werkzeugteil an der zweiten Öffnung eine Kavität zum Aufnehmen des in Schritt E beim Ausbilden des Lochs verdrängten Materials auf, wobei vorzugsweise das Gesamtvolumen der Kavität, wenn der Teilabschnitt in dem zweiten Hohlraum angeordnet ist, dem Volumen des verdrängten Materials entspricht.

Durch Vorsehen der Kavität wird der Vorteil erreicht, dass bei dem Durchstoßen in Schritt E verdrängtes Material dazu verwendet werden kann, den Rand des Loches zu verstärken. Insbesondere kann durch Vorsehen der Kavität wirksam verhindert werden, dass sich im Bereich des Loches lokale Spannungen (insb. Spannungsspitzen) aufbauen, die zu einer frühzeitigen Materialermüdung führen, und zwar derart, dass durch den Dorn verdrängtes Material in der Kavität aufgenommen wird und in Folge dessen um das Loch herum vorteilhaft eine Aufdickung oder Wanddickenerhöhung des Bauteils resultieren kann. Die Aufdickung oder Wanddickenerhöhung führt vorteilhaft zu einer Spannungsreduktion im Bereich des Loches, da die anliegenden Kräfte sich dann auf eine größere Querschnittsfläche verteilen. Das Gesamtvolumen der Kavität entspricht, wenn der Teilabschnitt in dem zweiten Hohlraum angeordnet ist, also wenn der Dorn das Formteil zur Gänze durchsetzt, vorzugsweise dem Volumen des verdrängten Materials. Dadurch ergibt sich der Vorteil, dass das gesamte von dem Dorn verdrängte Material zu einer Formgestaltung des Loches verwendet wird und sich Spannungen im Material bzw. Bauteil im Bereich des Loches besonders wirksam vermeiden lassen.

Das Formwerkzeug zur Durchführung eines erfindungsgemäßen Verfahrens umfasst wenigstens einem Dorn und ein ersten und ein zweiten Werkzeugteil, wobei das erste und das zweite Werkzeugteil in einem geschlossenen Zustand des Formwerkzeugs einander gegenüberliegen, wobei der Dorn einen Dorn-Endabschnitt mit einem sich verjüngenden Endbereich aufweist, wobei das erste Werkzeugteil wenigstens einen ersten Hohlraum aufweist, der über eine erste Öffnung zugänglich ist, wobei in dem ersten Hohlraum der Dorn in seiner Längsrichtung hin- und her beweglich ist, wobei das zweite Werkzeugteil wenigstens einen zweiten Hohlraum aufweist, der über eine zweite Öffnung zugänglich ist, wobei das Einsatzelement in dem zweiten Hohlraum anordenbar und in dem zweiten Hohlraum über die zweite Öffnung aus dem zweiten Hohlraum heraus bewegbar ist, wobei im geschlossenen Zustand des Formwerkzeugs die erste und die zweite Öffnung einander zugewandt sind, und wobei im geschlossenen Zustand des Formwerkzeugs der Dorn-Endabschnitt mit dem sich verjüngenden Endbereich über die erste Öffnung aus dem ersten Hohlraum heraus bewegbar und ein den sich verjüngenden Endbereich aufweisender Teilabschnitt des Dorn-Endabschnitts in den zweiten Hohlraum hinein bewegbar ist.

Das Formwerkzeug zur Durchführung des erfindungsgemäßen Verfahrens ermöglicht vorteilhaft die Herstellung eines Bauteils, dessen mechanische Festigkeit in Umgebung des Einsatzelements im Vergleich zu bekannten Lösungen deutlich erhöht ist.

### Kurzbeschreibung der Zeichnungen

Nachfolgend werden Ausführungsbeispiele der Erfindung anhand der beigefügten Zeichnungen näher erläutert. Es zeigt:

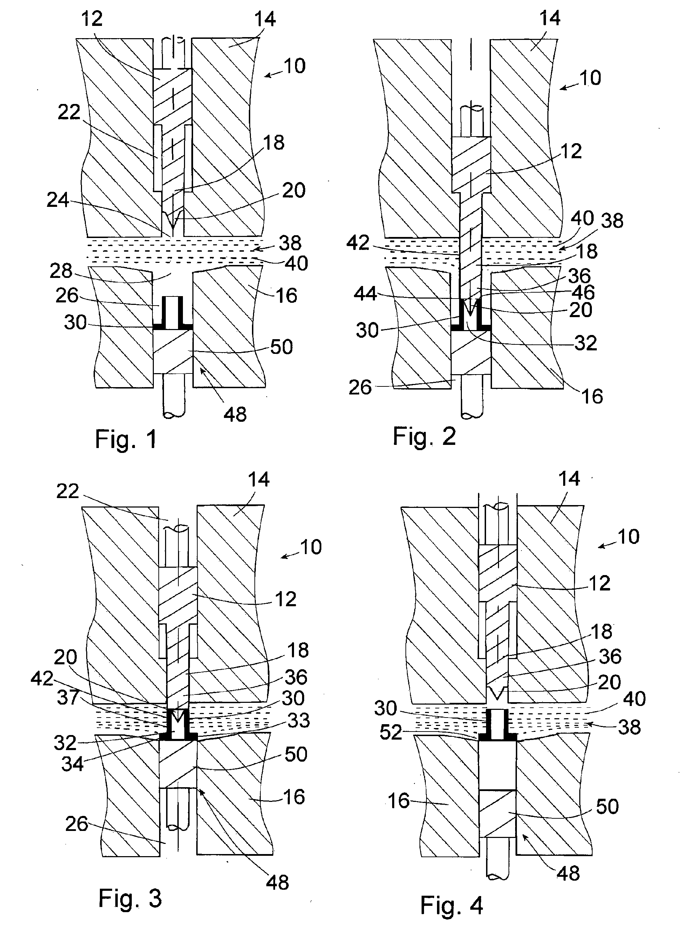

- Fig. 1-4: jeweils eine schematische Schnittdarstellung eines Ausführungsbeispiels eines erfindungsgemäßen Formwerkzeugs zusammen mit einem Gelege aus einer Mehrzahl von endlosfaserverstärkten Formteilen und einem Einsatzelement, wobei die Figuren sich insbesondere durch jeweils unterschiedliche Positionen des Doms bzw. des Einsatzelements voneinander unterscheiden.

Das in Fig. 1 bis 4 dargestellte Formwerkzeug 10 zur Durchführung eines erfindungsgemäßen Verfahrens weist einen Dorn 12 und ein erstes und ein zweites Werkzeugteil 14, 16 auf, die im hier dargestellten geschlossenen Zustand des Formwerkszeugs 10 einander gegenüberliegen. Der Dorn 12 weist einen Dorn-Endabschnitt 18 mit einem sich verjüngenden Endbereich 20 auf.

Das erste Werkzeugteil 14 weist einen ersten Hohlraum 22 auf, der über eine erste Öffnung 24 zugänglich ist. In dem ersten Hohlraum 22 ist der Dorn 12 in seiner Längsrichtung hin- und her beweglich. Der Dorn-Endabschnitt 18 mit dem sich verjüngenden Endbereich 20 ist über die erste Öffnung 24 aus dem ersten Hohlraum 22 heraus bewegbar bzw. beweglich.
Das zweite Werkzeugteil 16 weist einen zweiten Hohlraum 26 auf, der über eine zweite Öffnung 28 zugänglich ist, wobei das Einsatzelement 30 in dem zweiten Hohlraum 26 anordenbar (und hier bereits in dem zweiten Hohlraum 26 auch angeordnet) und in dem zweiten Hohlraum 26 über die zweite Öffnung 28 aus dem zweiten Hohlraum 26 heraus bewegbar ist.

Das Einsatzelement 30 ist in Form einer länglichen Hülse 30 ausgebildet, die eine Öffnung 32 und einen Endabschnitt 33 mit einem umlaufenden Bund 34 aufweist, der an einen Einbettbereich 37 der Hülse 30 angrenzt (vgl. Fig. 3).

In dem hier dargestellten geschlossenen Zustand des Formwerkszeugs 10 ist der Dorn-Endabschnitt 18 mit dem sich verjüngenden Endbereich 20 aus dem ersten Hohlraum 22 heraus bewegbar und ferner ist dem geschlossenen Zustand ein Teilabschnitt 36 des Dorn-Endabschnitts 18, der den sich verjüngenden Endbereich 20 aufweist, in den zweiten Hohlraum 26 hinein bewegbar, und zwar durch das Herausbewegen des Dorn-Endabschnitts 18 aus dem ersten Hohlraum 22 (vgl. hierzu insbesondere Fig. 2).

Die Fig. 1 veranschaulicht die Situation nach Durchführung der Schritte C und D des erfindungsgemäßen Verfahrens, also nach dem Einlegen eines Geleges 38 aus einer Mehrzahl von flächigen und endlosfaserverstärkten Formteilen 40 (die Endlosfasern sind in den Figuren zur Vereinfachung nicht dargestellt) mit jeweils einer die Fasern zumindest teilweise umgebenden thermoplastischen Matrix zwischen dem ersten und dem zweiten Werkzeugteil 14, 16 und nach dem Überführen der thermoplastischen Matrix jedes der Formteile 40 wenigstens teilweise oder zur Gänze in einen fließfähigen Zustand durch Erwärmen der Formteile 40.

Die Fig. 2 veranschaulicht die Situation nach Durchführung der Schritte E und F des erfindungsgemäßen Verfahrens. In Schritt E erfolgte das Durchstoßen des Geleges 38 mit dem Dorn durch Herausbewegen des Dorn-Endabschnitts 18 mit dem sich verjüngenden Endbereich 20 aus dem ersten Hohlraum 22 und Hineinbewegen des Teilabschnitts 36 in den zweiten Hohlraum 26 zum Ausbilden eines Lochs 42 in dem Gelege 38, in welches das Einsatzelement 30 einbettbar ist. In Schritt F erfolge nach dem Durchstoßen das in Kontakt bringen des in dem zweiten Hohlraum 26 angeordneten Einsatzelements 30 mit dem Teilabschnitt 36 derart, dass der sich verjüngende Endbereich 20 des Teilabschnitts 36 in die Öffnung 32 des Einsatzelements 30 bzw. der Hülse 30 eingebracht und dabei die Öffnung 32 einseitig verschlossen wurde. Ferner wurde in Schritt F eine ringförmig umlaufende Anlagefläche 44 des Teilabschnitts 36 mit einer ringförmig umlaufenden Stirnfläche 46 der Hülse 30 in Kontakt gebracht.

Dadurch, dass in Schritt E der von dem Dorn 12 durchstoßene Bereich des Geleges 38 bzw. die thermoplastische Matrix jedes Formteils 40 des Geleges 38 sich wenigstens teilweise oder zur Gänze in einem fließfähigen Zustand befindet, werden bei dem Durchstoßen - im Unterschied zu einer denkbaren bekannten Lösung, bei welcher in ausgehärtetes faserverstärktes Material ein Loch gebohrt würde - alle oder nahezu alle Endlosfasern vorteilhaft seitlich weggeschoben ohne dabei zu reißen. Insofern eignet sich das erfindungsgemäße Verfahren besonders vorteilhaft für die Herstellung von Bauteilen, die mit Endlosfasern verstärkt sind.

Die Fig. 3 veranschaulicht die Situation nach Durchführung des Schritts G des erfindungsgemäßen Verfahrens, also nach Einbetten des Einsatzelements 30 in das durch das Durchstoßen in Schritt E gebildete Loch 42 durch Bewegen des in dem zweiten Hohlraum 26 angeordneten Teilabschnitts 36 unter Beibehaltung des Kontakts mit dem Einsatzelement 30 aus dem zweiten Hohlraum 26 heraus und hin zu dem ersten Hohlraum 22, wobei das Bewegen aus dem zweiten Hohlraum 26 heraus und hin zu dem ersten Hohlraum 22 unter Beibehaltung des die Öffnung 32 einseitig verschließenden Zustands vorgenommen wurde. In Schritt G wurde der Einbettbereich 37 des in Form einer Hülse 30 ausgebildeten Einsatzelements 30 in das Loch 42 eingebettet und der umlaufende Bund 34 wurde auf dem das Loch 42 umgebenden Bereich des Formteils 40 aufgelegt. Das Einbetten des Einsatzelements 30 in das Loch 42 erfolgte dadurch, dass der Teilabschnitt 36 unter Beibehaltung des Kontakts mit dem Einsetzelement 30 bzw. des die Öffnung 32 einseitig verschließenden Zustands mittels einer auf das Einsatzelement 30 einwirkenden Druckkraft aus dem zweiten Hohlraum 26 heraus und hin zu dem ersten Hohlraum 22 bewegt wurde, wobei hierfür eine Schubeinrichtung 48 mit einem in Längsrichtung des zweiten Hohlraums 26 verschiebbaren stempelförmigen Schubelement 50 zum Übertragen der Druckkraft auf das Einsatzelement 30 vorgesehen ist.

Über das Schubelement 50 erfolgte auch die Übertragung bzw. Einwirkung einer Druckkraft auf den umlaufenden Bund 34 des in Form einer Hülse 30 ausgebildeten Einsatzelements 30 zum Anpressen des Bunds 34 an das Gelege 38. Die Anpressung diente der Konsolidierung des Geleges 38 im Umgebungsbereich des Einsatzelements 30. Der aufgelegte umlaufende Bund 34 kann ferner über das Schubelement 50 auch wenigstens teilweise oder zur Gänze in das Formteil hineingepresst werden. Auf diese Weise kann der Bund 34 des Einsatzelements 30 auch bündig zur der Oberfläche des Bauteils ausgerichtet werden.

Dadurch, dass das Einsatzelement 30 in ein Loch 42 eingebettet wird, das in einem thermoplastischen Kunststoffmaterial bzw. einer thermoplastischen Matrix ausgebildet ist, das sich wenigstens teilweise oder zur Gänze in einem fließfähigen Zustand befindet, können sich infolge des vorhandenen fließfähigen Zustands vorteilhaft auch keine oder keine wesentlichen Spannungserhöhungen in angrenzender Umgebung des Lochs 42 ausbilden. Auch die Bildung von Anfangrissen wird erfindungsgemäß wirksam derart vermieden oder sehr stark reduziert, da in Schritt E der Dorn 12 bzw. der sich verjüngende Endbereich 20 des Dorns 12 das Loch 42 in dem fließfähigen thermoplastischen Kunststoffmaterial bzw. in dem fließfähigen thermoplastischen Matrixmaterial bzw. in der fließfähigen thermoplastischen Matrix ausbildet, also nicht in einem harten bzw. ausgehärtetem Material, wie es bei bekannten Lösungen der Fall ist.

Die Fig. 4 veranschaulicht die Situation nach Durchführung der Schritte H und I des erfindungsgemäßen Verfahrens und vor Schritt J des erfindungsgemäßen Verfahrens, also vor dem Abkühlen des Bauteils. In Schritt H erfolgte das Ausbilden des Bauteils durch Verformen des Geleges 38 durch das Formwerkzeug 10. Eine Verformung wird dadurch ermöglicht, dass sich das thermoplastische Matrixmaterial des Geleges 38 bzw. die thermoplastische Matrix jedes Formteils 40 des Geleges 38 wenigstens teilweise oder zur Gänze in dem fließfähigen Zustand befindet. In Schritt I erfolgte das Wegbewegen des Teilabschnitts 36 von dem Einsatzelement 30 durch Hineinbewegen des Teilabschnitts 36 bzw. des gesamten Dorn-Endabschnitts 18 in den ersten Hohlraum 22. Ferner erfolgte in Schritt I das Zurückbewegen des stempelförmigen Schubelements 50 in die in Fig. 1 gezeigte Ausgangsposition.

Nach Schritt J des erfindungsgemäßen Verfahrens, also nach dem Abkühlen des Bauteils, erfolgt (hier nicht dargestellt) das Öffnen des Formwerkzeugs 10 und das Entnehmen des Bauteils aus dem Formwerkzeug 10.

Das zweite Werkzeugteil 16 weist an der zweiten Öffnung 28 eine Kavität 52 (vgl. Fig. 4) zum Aufnehmen des in Schritt E beim Ausbilden des Lochs 42 verdrängten Materials auf, wobei das Gesamtvolumen bzw. das Volumen der Kavität 52, wenn der Teilabschnitt 36 in dem zweiten Hohlraum 26 angeordnet ist, dem Volumen des verdrängten Materials entspricht.

Das in Längsrichtung des zweiten Hohlraums 26 bewegbare Einsatzelement 30 kann bevorzugt in Querrichtung des zweiten Hohlraums 26 spielbehaftet in dem zweiten Hohlraum 26 bewegbar sein (hier nicht dargestellt). Durch die in Querrichtung spielbehaftete Bewegbarkeit des Einsatzelements 30 kann der sich verjüngende Endbereich 20 vorteilhaft und auf praktische Weise nach Art einer Selbstzentrierung in die Öffnung 32 des Einsatzelements 30, die sich im Wesentlichen in Längsrichtung des zweiten Hohlraums 26 erstreckt, eingebracht werden.

## Patentansprüche

1. Verfahren zur Herstellung eines Bauteils mit wenigstens einem in das Bauteil wenigstens teilweise eingebetteten Einsatzelement (30) unter Verwendung eines Formwerkzeugs (10),
wobei das Formwerkzeug (10) wenigstens einen Dorn (12) und ein erstes und ein zweites Werkzeugteil (14, 16) aufweist, wobei das erste und das zweite Werkzeugteil (14, 16) in einem geschlossenen Zustand des Formwerkzeugs (10) einander gegenüberliegen,
wobei der Dorn (12) einen Dorn-Endabschnitt (18) mit einem sich verjüngenden Endbereich (20) aufweist,
wobei das erste Werkzeugteil (14) wenigstens einen ersten Hohlraum (22) aufweist, der über eine erste Öffnung (24) zugänglich ist, wobei in dem ersten Hohlraum (22) der Dorn (12) in seiner Längsrichtung hin- und her beweglich ist,
wobei das zweite Werkzeugteil (16) wenigstens einen zweiten Hohlraum (26) aufweist, der über eine zweite Öffnung (28) zugänglich ist, wobei das Einsatzelement (30) in dem zweiten Hohlraum (26) anordenbar und in dem zweiten Hohlraum (26) über die zweite Öffnung (28) aus dem zweiten Hohlraum (26) heraus bewegbar ist,
wobei im geschlossenen Zustand des Formwerkzeugs (10) die erste und die zweite Öffnung (24, 28) einander zugewandt sind,
und wobei im geschlossenen Zustand des Formwerkzeugs (10) der Dorn-Endabschnitt (18) mit dem sich verjüngenden Endbereich (20) über die erste Öffnung (24) aus dem ersten Hohlraum (22) heraus bewegbar und ein den sich verjüngenden Endbereich (20) aufweisender Teilabschnitt (36) des Dorn-Endabschnitts (18) in den zweiten Hohlraum (26) hinein bewegbar ist, **dadurch gekennzeichnet dass**
das Verfahren die folgenden Schritte umfasst:
(A) Bereitstellen wenigstens eines Formteils (40), das wenigstens teilweise aus einem Kunststoffmaterial besteht, und Bereitstellen wenigstens eines einzubettenden Einsatzelements (30),
(B) Anordnen des Einsatzelements (30) in dem zweiten Hohlraum (26),
(C) Einlegen des wenigstens einen Formteils (40) zwischen dem ersten und dem zweiten Werkzeugteil (14, 16) und Schließen des Formwerkzeugs (10),
(D) Überführen des Kunststoffmaterials wenigstens des Bereichs des Formteils (40) in einen fließfähigen Zustand, in welchen das Einsatzelement (30) wenigstens teilweise einzubetten ist,
(E) Durchstoßen des Formteils (40) mit dem Dorn (12) durch Herausbewegen des Dorn-Endabschnitts (18) mit dem sich verjüngenden Endbereich (20) aus dem ersten Hohlraum (22) und Hineinbewegen des Teilabschnitts (36) in den zweiten Hohlraum (26) zum Ausbilden eines Lochs (42) in dem Formteil (40), in welches das Einsatzelement (30) einbettbar ist, und
(F) nach dem Durchstoßen in Kontakt bringen des in dem zweiten Hohlraum (26) angeordneten Einsatzelements (30) mit dem Teilabschnitt (36),
(G) wenigstens teilweises Einbetten des Einsatzelements (30) in das durch das Durchstoßen in Schritt (E) gebildete Loch (42) durch Bewegen des in dem zweiten Hohlraum (26) angeordneten Teilabschnitts (36) unter Beibehaltung des Kontakts mit dem Einsatzelement (30) aus dem zweiten Hohlraum (26) heraus und hin zu dem ersten Hohlraum (22),
(H) Ausbilden des Bauteils durch Verformen des Formteils (40) durch das Formwerkzeug,
(I) Wegbewegen des Teilabschnitts (36) von dem Einsatzelement (30) durch Hineinbewegen des Teilabschnitts (36) in den ersten Hohlraum (22), und
(J) Abkühlen des Bauteils.

2. Verfahren nach Anspruch 1, **dadurch gekennzeichnet, dass** das Einsatzelement (30) in Querrichtung des zweiten Hohlraums (26) spielbehaftet in dem zweiten Hohlraum (26) bewegbar ist.

3. Verfahren nach Anspruch 2 oder 3, **dadurch gekennzeichnet, dass** das Einsatzelement (30) eine Vertiefung oder eine Öffnung (32) aufweist, und wobei in Schritt (F) der sich verjüngende Endbereich (20) wenigstens teilweise in die Vertiefung oder die Öffnung (32) des Einsatzelements (30) eingebracht und dabei die Vertiefung verschlossen oder die Öffnung (32) einseitig verschlossen wird, und wobei in Schritt (G) das Bewegen aus dem zweiten Hohlraum (26) heraus und hin zu dem ersten Hohlraum (22) unter Beibehaltung des die Vertiefung verschließenden Zustands oder die Öffnung (32) einseitig verschließenden Zustands vorgenommen wird.

4. Verfahren nach einem der vorangehenden Ansprüche, **dadurch gekennzeichnet, dass** in Schritt (G) zum wenigstens teilweisen Einbetten des Einsatzelements (30) in das Loch (42), der Teilabschnitt (36) unter Beibehaltung des Kontakts mit dem Einsatzelement (30) mittels einer auf das Einsatzelement (30) einwirkenden Druckkraft aus dem zweiten Hohlraum (26) heraus und hin zu dem ersten Hohlraum (22) bewegt wird.

5. Verfahren nach einem der Ansprüche 1 bis 3, **dadurch gekennzeichnet, dass** in Schritt (F) der Teilabschnitt (36) mit dem Einsatzelement (30) lösbar verbunden wird, und dass in Schritt (G) zum wenigstens teilweisen Einbetten des Einsatzelements (30) in das Loch (42), der Teilabschnitt (36) mittels einer auf den Dorn (12) einwirkenden Zugkraft aus dem zweiten Hohlraum (26) heraus und hin zu dem ersten Hohlraum (22) bewegt wird, und dass nach dem Einbetten die lösbare Verbindung des Teilabschnitts (36) mit dem Einsatzelement (30) gelöst wird.

6. Verfahren nach Anspruch 5, **dadurch gekennzeichnet, dass** zum lösbaren Verbinden eine Schraubverbindung oder eine magnetische Verbindung oder eine lösbare kraftschlüssige und/oder formschlüssige Verbindung vorgesehen ist.

7. Verfahren nach einem der vorangehenden Ansprüche, **dadurch gekennzeichnet, dass** das Einsatzelement (30) länglich ausgebildet ist und einen Endabschnitt (33) mit einem umlaufenden Bund (34) aufweist, der an einen Einbettbereich (37) des Einsatzelements (30) angrenzt, wobei der Einbettbereich (37) in Schritt (G) in das Loch (42) eingebettet und der umlaufende Bund (34) wenigstens bereichsweise auf dem das Loch (42) umgebenden Bereich des Formteils (40) aufgelegt wird.

8. Verfahren nach Anspruch 7, **dadurch gekennzeichnet, dass** der aufgelegte umlaufende Bund (34) mittels einer auf den Bund einwirkenden Druckkraft zum Konsolidieren des Formteils (40) im Umgebungsbereich des Einsatzelements (30) an das Formteil (40) gepresst wird.

9. Verfahren nach Anspruch 4 oder 8, **dadurch gekennzeichnet, dass** eine Schubeinrichtung (48) mit einem in Längsrichtung des zweiten Hohlraums (26) verschiebbaren stempelförmigen Schubelement (50) zum Übertragen der Druckkraft auf das Einsatzelement (30) vorgesehen ist.

10. Verfahren nach einem der vorangehenden Ansprüche, **dadurch gekennzeichnet, dass** in Schritt (B) das Einsatzelement (30) ortsfest in dem zweiten Hohlraum (26) angeordnet wird.

11. Verfahren nach einem der vorangehenden Ansprüche, **dadurch gekennzeichnet, dass** das wenigstens eine Formteil (40) ein flächig ausgebildetes Formteil (40) ist.

12. Verfahren nach Anspruch 11, **dadurch gekennzeichnet, dass** das wenigstens eine Formteil (40) ein endlosfaserverstärktes Formteil (40) mit einer die Fasern zumindest teilweise umgebenden thermoplastischen Matrix ist.

13. Verfahren nach Anspruch 11 oder 12, **dadurch gekennzeichnet, dass** in Schritt (C) ein Gelege (38) aus einer Mehrzahl von aufeinander gelegten und/oder aneinander gelegten und/oder nebeneinander gelegten Formteilen (40) zwischen dem ersten und dem zweiten Werkzeugteil (14, 16) eingelegt wird.

14. Verfahren nach einem der vorangehenden Ansprüche, **dadurch gekennzeichnet, dass** das Einsatzelement (30) in Form einer Hülse (30) oder in Form eines Gewindeeinsatzes mit einem Innengewinde ausgebildet ist.

15. Verfahren nach einem der vorangehenden Ansprüche, **dadurch gekennzeichnet, dass** in Schritt (C) nach dem Schließen des Formwerkzeugs (10) das Formteil (40) zwischen dem ersten und zweiten Werkzeugteil (14, 16) durch aufeinander zubewegen des ersten und zweiten Werkzeugteils (14, 16) eingeklemmt wird.

16. Verfahren nach einem der vorangehenden Ansprüche, **dadurch gekennzeichnet, dass** das zweite Werkzeugteil (16) an der zweiten Öffnung (28) eine Kavität (52) zum Aufnehmen des in Schritt (E) beim Ausbilden des Lochs (42) verdrängten Materials aufweist, wobei vorzugsweise das Gesamtvolumen der Kavität (52), wenn der Teilabschnitt (36) in dem zweiten Hohlraum (26) angeordnet ist, dem Volumen des verdrängten Materials entspricht.

17. Formwerkzeug (10) zur Durchführung eines Verfahrens nach einem der Ansprüche 1 bis 16, mit wenigstens einem Dorn (12) und einem ersten und einem zweiten Werkzeugteil (14, 16), wobei das erste und das zweite Werkzeugteil (14, 16) in einem geschlossenen Zustand des Formwerkzeugs (10) einander gegenüberliegen,
wobei der Dorn (12) einen Dorn-Endabschnitt (18) mit einem sich verjüngenden Endbereich (20) aufweist,
wobei das erste Werkzeugteil (14) wenigstens einen ersten Hohlraum (22) aufweist, der über eine erste Öffnung (24) zugänglich ist, wobei in dem ersten Hohlraum (22) der Dorn (12) in seiner Längsrichtung hin- und her beweglich ist,
wobei das zweite Werkzeugteil (16) wenigstens einen zweiten Hohlraum (26) aufweist, der über eine zweite Öffnung (28) zugänglich ist, wobei das Einsatzelement (30) in dem zweiten Hohlraum (26) anordenbar und in dem zweiten Hohlraum (26) über die zweite Öffnung (28) aus dem zweiten Hohlraum (26) heraus bewegbar ist,
wobei im geschlossenen Zustand des Formwerkzeugs (10) die erste und die zweite Öffnung (24, 28) einander zugewandt sind,
und wobei im geschlossenen Zustand des Formwerkzeugs (10) der Dorn-Endabschnitt (18) mit dem sich verjüngenden Endbereich (20) über die erste Öffnung (24) aus dem ersten Hohlraum (22) heraus bewegbar und ein den sich verjüngenden Endbereich (20) aufweisender Teilabschnitt (36) des Dorn-Endabschnitts (18) in den zweiten Hohlraum (26) hinein bewegbar ist.

## Claims

1. Method for producing a component with at least one insert element (30) at least partially embedded in the component and use of a moulding tool (10),
wherein the moulding tool (10) has at least one mandrel (12) and a first tool part (14) and a second tool part (16), the first and second tool parts (14, 16) lying opposite one another in a closed state of the moulding tool (10),
wherein the mandrel (12) has a mandrel end portion (18) with a tapering end region (20),
wherein the first tool part (14) has at least one first cavity (22), which is accessible via a first opening (24), the mandrel (12) being movable back and forth in its longitudinal direction in the first cavity (22),
wherein the second tool part (16) has at least one second cavity (26), which is accessible via a second opening (28), the insert element (30) being able to be arranged in the second cavity (26) and being able to be moved in the second cavity (26) via the second opening (28) out of the second cavity (26),
wherein the first and second openings (24, 28) are facing one another in the closed state of the moulding tool (10),
and wherein, in the closed state of the moulding tool (10), the mandrel end portion (18) can be moved with the tapering end region (20) via the first opening (24) out of the first cavity (22) and a subportion (36) of the mandrel end portion (18) that has the tapering end region (20) can be moved into the second cavity (26), **characterized in that**
the method comprises the following steps:
(A) providing at least one moulded part (40), which consists at least partially of a plastics material, and providing at least one insert element (30) to be embedded,
(B) arranging the insert element (30) in the second cavity (26),
(C) placing the at least one moulded part (40) between the first and second tool parts (14, 16) and closing the moulding tool (10),
(D) transforming the plastics material at least of the region of the moulded part (40) into a flowable state, in which the insert element (30) is to be at least partially embedded,
(E) piercing the moulded part (40) with the mandrel (12) by moving the mandrel end portion (18) with the tapering end region (20) out of the first cavity (22) and moving the subportion (36) into the second cavity (26) to form a hole (42) in the moulded part (40), in which the insert element (30) can be embedded, and
(F) after the piercing, bringing the insert element (30) that is arranged in the second cavity (26) into contact with the subportion (36),
(G) at least partially embedding the insert element (30) in the hole (42) formed by the piercing in step (E), by moving the subportion (36) arranged in the second cavity (26) out of the second cavity (26) and towards the first cavity (22) while maintaining contact with the insert element (30),
(H) forming the component by deforming the moulded part (40) by the moulding tool,
(I) moving the subportion (36) away from the insert element (30) by moving the subportion (36) into the first cavity (22), and
(J) cooling the component.

2. Method according to Claim 1, **characterized in that** the insert element (30) is movable in the transverse direction of the second cavity (26) with play in the second cavity (26).

3. Method according to Claim 2 or 3, **characterized in that** the insert element (30) has a depression or an opening (32), and wherein, in step (F), the tapering end region (20) is at least partially introduced into the depression or the opening (32) of the insert element (30) and the depression is thereby closed or the opening (32) is closed on one side, and wherein, in step (G), the moving out of the second cavity (26) and towards the first cavity (22) is performed while maintaining the state of closing the depression or the state of closing the opening (32) on one side.

4. Method according to one of the preceding claims, **characterized in that**, in step (G), for the at least partial embedding of the insert element (30) in the hole (42), the subportion (36) is moved out of the second cavity (26) and towards the first cavity (22) while maintaining the contact with the insert element (30) by means of a compressive force acting on the insert element (30).

5. Method according to one of Claims 1 to 3, **characterized in that**, in step (F), the subportion (36) is releasably connected to the insert element (30), and **in that**, in step (G), for the at least partial embedding of the insert element (30) in the hole (42), the subportion (36) is moved out of the second cavity (26) and towards the first cavity (22) by means of a tensile force acting on the mandrel (12), and **in that**, after the embedding, the releasable connection of the subportion (36) to the insert element (30) is released.

6. Method according to Claim 5, **characterized in that** a screw connection or a magnetic connection or a releasable nonpositive and/or positive connection is provided for the releasable connecting.

7. Method according to one of the preceding claims, **characterized in that** the insert element (30) is of an elongated form and has an end portion (33) with a peripheral collar (34), which is adjacent to an embedding region (37) of the insert element (30), wherein the embedding region (37) is embedded in the hole (42) in step (G) and the peripheral collar (34) is placed at least partly on the region of the moulded part (40) surrounding the hole (42).

8. Method according to Claim 7, **characterized in that** the placed-on peripheral collar (34) is pressed onto the moulded part (40) by means of a compressive force acting on the collar to consolidate the moulded part (40) in the surrounding region of the insert element (30).

9. Method according to Claim 4 or 8, **characterized in that** a pushing device (48), with a pushing element (50) in the form of a punch that is displaceable in the longitudinal direction of the second cavity (26), is provided for transferring the compressive force to the insert element (30).

10. Method according to one of the preceding claims, **characterized in that**, in step (B), the insert element (30) is arranged fixed in place in the second cavity (26).

11. Method according to one of the preceding claims, **characterized in that** the at least one moulded part (40) is a two-dimensionally formed moulded part (40).

12. Method according to Claim 11, **characterized in that** the at least one moulded part (40) is a continuous-fibre-reinforced moulded part (40) with a thermoplastic matrix at least partially surrounding the fibres.

13. Method according to Claim 11 or 12, **characterized in that**, in step (C), a scrim (38) comprising a plurality of moulded parts (40) placed one on top of the other and/or placed one against the another and/or placed one next to the another is placed between the first and second tool parts (14, 16).

14. Method according to one of the preceding claims, **characterized in that** the insert element (30) is given the form of a sleeve (30) or the form of a threaded insert with an internal thread.

15. Method according to one of the preceding claims, **characterized in that**, in step (C), after the closing of the moulding tool (10) the moulded part (40) is clamped in between the first and second tool parts (14, 16) by the first and second tool parts (14, 16) being moved towards one another.

16. Method according to one of the preceding claims, **characterized in that** the second tool part (16) has at the second opening (28) a cavity (52) for receiving the material displaced when forming the hole (42) in step (E), the overall volume of the cavity (52) when the subportion (36) is arranged in the second cavity (26) preferably corresponding to the volume of the displaced material.

17. Moulding tool (10) for carrying out a method according to one of Claims 1 to 16, with at least one mandrel (12) and a first tool part (14) and a second tool part (16), the first and second tool parts (14, 16) lying opposite one another in a closed state of the moulding tool (10),
wherein the mandrel (12) has a mandrel end portion (18) with a tapering end region (20),
wherein the first tool part (14) has at least one first cavity (22), which is accessible via a first opening (24), the mandrel (12) being movable back and forth in its longitudinal direction in the first cavity (22),
wherein the second tool part (16) has at least one second cavity (26), which is accessible via a second opening (28), the insert element (30) being able to be arranged in the second cavity (26) and being able to be moved in the second cavity (26) via the second opening (28) out of the second cavity (26),
wherein the first and second openings (24, 28) are facing one another in the closed state of the moulding tool (10),
and wherein, in the closed state of the moulding tool (10), the mandrel end portion (18) can be moved with the tapering end region (20) via the first opening (24) out of the first cavity (22) and a subportion (36) of the mandrel end portion (18) that has the tapering end region (20) can be moved into the second cavity (26).

## Revendications

1. Procédé de fabrication d'un composant comprenant au moins un élément d'insertion (30) intégré au moins en partie dans le composant, en utilisant un outil de formage (10),
l'outil de formage (10) présentant au moins un mandrin (12) et une première et une deuxième partie d'outil (14, 16), la première et la deuxième partie d'outil (14, 16) étant opposées l'une à l'autre dans un état fermé de l'outil de formage (10),
le mandrin (12) présentant une portion d'extrémité de mandrin (18) avec une région d'extrémité (20) se rétrécissant,
la première partie d'outil (14) présentant au moins une première cavité (22) accessible par le biais d'une première ouverture (24), le mandrin (12) étant déplaçable d'avant en arrière dans sa direction longitudinale dans la première cavité (22),
la deuxième partie d'outil (16) présentant au moins une deuxième cavité (26) accessible par le biais d'une deuxième ouverture (28), l'élément d'insertion (30) pouvant être disposé dans la deuxième cavité (26) et, dans la deuxième cavité (26), pouvant être déplacé hors de la deuxième cavité (26) par le biais de la deuxième ouverture (28),
la première et la deuxième ouverture (24, 28) étant tournées l'une vers l'autre dans l'état fermé de l'outil de formage (10),
et, dans l'état fermé de l'outil de formage (10), la portion d'extrémité de mandrin (18) avec la région d'extrémité (20) se rétrécissant pouvant être déplacée hors de la première cavité (22) par le biais de la première ouverture (24) et une portion partielle (36) de la portion d'extrémité de mandrin (18) présentant la région d'extrémité (20) se rétrécissant pouvant être déplacée à l'intérieur de la deuxième cavité (26), **caractérisé en ce que** le procédé comprend les étapes suivantes :
(A) fourniture d'au moins une pièce formée (40) qui se compose au moins en partie d'une matière plastique et fourniture d'au moins un élément d'insertion (30) à intégrer,
(B) disposition de l'élément d'insertion (30) dans la deuxième cavité (26),
(C) insertion de l'au moins une pièce formée (40) entre la première et la deuxième partie d'outil (14, 16) et fermeture de l'outil de formage (10),
(D) transfert de la matière plastique d'au moins la région de la pièce formée (40) dans un état coulant dans lequel l'élément d'insertion (30) doit être intégré au moins en partie,
(E) perçage de la pièce formée (40) avec le mandrin (12) en faisant ressortir la portion d'extrémité de mandrin (18) avec la région d'extrémité (20) se rétrécissant hors de la première cavité (22) et déplacement de la portion partielle (36) à l'intérieur de la deuxième cavité (26) pour réaliser un trou (42) dans la pièce formée (40), dans lequel peut être intégré l'élément d'insertion (30), et
(F) après le perçage, mise en contact de l'élément d'insertion (30) disposé dans la deuxième cavité (26) avec la portion partielle (36),
(G) intégration au moins partielle de l'élément d'insertion (30) dans le trou (42) formé par le perçage à l'étape (E) par déplacement de la portion partielle (36) disposée dans la deuxième cavité (26), en conservant le contact avec l'élément d'insertion (30), hors de la deuxième cavité (26) et vers la première cavité (22),
(H) réalisation du composant par déformation de la pièce formée (40) par l'outil de formage,
(I) enlèvement de la portion partielle (36) de l'élément d'insertion (30) par déplacement de la portion partielle (36) à l'intérieur de la première cavité (22), et
(J) refroidissement du composant.

2. Procédé selon la revendication 1, **caractérisé en ce que** l'élément d'insertion (30) peut être déplacé dans la direction transversale de la deuxième cavité (26) avec jeu dans la deuxième cavité (26).

3. Procédé selon la revendication 2 ou 3, **caractérisé en ce que** l'élément d'insertion (30) présente un renfoncement ou une ouverture (32), et, dans l'étape (F), la région d'extrémité (20) se rétrécissant étant introduite au moins en partie dans le renfoncement ou dans l'ouverture (32) de l'élément d'insertion (30) et en l'occurrence le renfoncement étant fermé ou l'ouverture (32) étant fermée d'un côté, et, dans l'étape (G), le déplacement hors de la deuxième cavité (26) et vers la première cavité (22) étant effectué, en conservant l'état fermant le renfoncement ou l'état fermant l'ouverture (32) d'un côté.

4. Procédé selon l'une quelconque des revendications précédentes, **caractérisé en ce que** dans l'étape (G), pour l'intégration au moins partielle de l'élément d'insertion (30) dans le trou (42), la portion partielle (36), en conservant le contact avec l'élément d'insertion (30), au moyen d'une force de pression agissant sur l'élément d'insertion (30), est déplacée hors de la deuxième cavité (26) et vers la première cavité (22).

5. Procédé selon l'une quelconque des revendications 1 à 3, **caractérisé en ce que** dans l'étape (F), la portion partielle (36) est connectée de manière détachable à l'élément d'insertion (30), et **en ce que** dans l'étape (G), pour l'intégration au moins partielle de l'élément d'insertion (30) dans le trou (42), la portion partielle (36) est déplacée au moyen d'une force de traction agissant sur le mandrin (12) hors de la deuxième cavité (26) et vers la première cavité (22), et **en ce qu'**après l'intégration, la connexion détachable de la portion partielle (36) à l'élément d'insertion (30) est libérée.

6. Procédé selon la revendication 5, **caractérisé en ce que** pour la connexion détachable, une connexion vissée ou une connexion magnétique ou une connexion détachable par engagement par force et/ou par engagement par correspondance de forme est prévue.

7. Procédé selon l'une quelconque des revendications précédentes, **caractérisé en ce que** l'élément d'insertion (30) est réalisé sous forme allongée et présente une portion d'extrémité (33) avec un épaulement périphérique (34) qui est adjacent à une région d'intégration (37) de l'élément d'insertion (30), la région d'intégration (37), dans l'étape (G), étant intégrée dans le trou (42) et l'épaulement périphérique (34) étant posé au moins en partie sur la région de la pièce formée (40) entourant le trou (42).

8. Procédé selon la revendication 7, **caractérisé en ce que** l'épaulement périphérique posé (34) est pressé contre la pièce formée (40) au moyen d'une force de pression agissant sur l'épaulement en vue de consolider la pièce formée (40) dans la région périphérique de l'élément d'insertion (30).

9. Procédé selon la revendication 4 ou 8, **caractérisé en ce qu'**un dispositif de poussée (48) est prévu avec un élément de poussée (50) en forme de poinçon déplaçable dans la direction longitudinale de la deuxième cavité (26), en vue de transférer la force de pression à l'élément d'insertion (30).

10. Procédé selon l'une quelconque des revendications précédentes, **caractérisé en ce que** dans l'étape (B), l'élément d'insertion (30) est disposé fixement dans la deuxième cavité (26).

11. Procédé selon l'une quelconque des revendications précédentes, **caractérisé en ce que** l'au moins une pièce formée (40) est une pièce formée (40) réalisée sous forme plate.

12. Procédé selon la revendication 11, **caractérisé en ce que** l'au moins une pièce formée (40) est une pièce formée renforcée par des fibres sans fin (40) avec une matrice thermoplastique entourant au moins partiellement les fibres.

13. Procédé selon la revendication 11 ou 12, **caractérisé en ce que** dans l'étape (C) un canevas (38) constitué d'une pluralité de pièces formées (40) posées les unes sur les autres et/ou les unes contre les autres et/ou les unes à côté des autres est intégré entre la première et la deuxième partie d'outil (14, 16).

14. Procédé selon l'une quelconque des revendications précédentes, **caractérisé en ce que** l'élément d'insertion (30) est réalisé sous forme d'une douille (30) ou sous forme d'un insert fileté avec un filetage interne.

15. Procédé selon l'une quelconque des revendications précédentes, **caractérisé en ce que** dans l'étape (C), après la fermeture de l'outil de formage (10), la pièce formée (40) est serrée entre la première et la deuxième partie d'outil (14, 16) par déplacement l'une vers l'autre de la première et de la deuxième partie d'outil (14, 16).

16. Procédé selon l'une quelconque des revendications précédentes, **caractérisé en ce que** la deuxième partie d'outil (16) présente, au niveau de la deuxième ouverture (28), une cavité (52) pour recevoir la matière repoussée dans l'étape (E) lors de la réalisation du trou (42), le volume total de la cavité (52), lorsque la portion partielle (36) est disposée dans la deuxième cavité (26), correspondant de préférence au volume de la matière repoussée.

17. Outil de formage (10) pour mettre en oeuvre un procédé selon l'une quelconque des revendications 1 à 16, comprenant au moins un mandrin (12) et une première et une deuxième partie d'outil (14, 16), la première et la deuxième partie d'outil (14, 16) étant opposées l'une à l'autre dans un état fermé de l'outil de formage (10),
le mandrin (12) présentant une portion d'extrémité de mandrin (18) avec une région d'extrémité (20) se rétrécissant,
la première partie d'outil (14) présentant au moins une première cavité (22) accessible par le biais d'une première ouverture (24), le mandrin (12) étant déplaçable d'avant en arrière dans sa direction longitudinale dans la première cavité (22),
la deuxième partie d'outil (16) présentant au moins une deuxième cavité (26) accessible par le biais d'une deuxième ouverture (28), l'élément d'insertion (30) pouvant être disposé dans la deuxième cavité (26) et, dans la deuxième cavité (26), pouvant être déplacé hors de la deuxième cavité (26) par le biais de la deuxième ouverture (28),
la première et la deuxième ouverture (24, 28) étant tournées l'une vers l'autre dans l'état fermé de l'outil de formage (10),
et, dans l'état fermé de l'outil de formage (10), la portion d'extrémité de mandrin (18) avec la région d'extrémité (20) se rétrécissant pouvant être déplacée hors de la première cavité (22) par le biais de la première ouverture (24) et une portion partielle (36) de la portion d'extrémité de mandrin (18) présentant la région d'extrémité (20) se rétrécissant pouvant être déplacée à l'intérieur de la deuxième cavité (26).
